# FASCICULE DE BREVET EUROPEEN

(11) **EP 2 572 821 B1**
(45) Date de publication et mention de la délivrance du brevet: **22.02.2017**
(21) Numéro de dépôt: 12185292.5
(22) Date de dépôt: 20.09.2012
(51) Int. Cl.: B23K 26/12

(54) **Dispositif permettant l'utilisation d'une source laser au sein d'une enceinte confinée sans contamination de ladite source via l'utilisation d'une manche**
Vorrichtung, die die Verwendung einer Laserquelle im Innern eines begrenzten Behälters ohne Kontamination dieser Quelle durch die Verwendung eines Ärmels ermöglicht
Device for using a laser source within a confined enclosure without contamination of said source via the use of a sleeve

(30) Priorité: 22.09.2011 FR 1158468
(43) Date de publication de la demande: 27.03.2013
(73) Titulaire: STMI Société des Techniques en Milieu Ionisant, F-91196 Gif-sur-Yvette (FR)
(72) Inventeur: Moggia, Fabrice, 91190 Gif-sur-Yvette (FR); Du Gardin, Benoît, 21320 Pouilly-en-Auxois (FR); Ladet, Xavier, 84290 Cairanne (FR)
(74) Mandataire: Ilgart, Jean-Christophe

(56) Documents cités:
- WO-A2-2007/086870
- FR-A1- 2 774 801

## Description

L'invention porte sur un dispositif de manche, obturée par une tape au moins partiellement transparente à une source LASER. Lorsque celle-ci est fixée sur la tape, l'invention peut traiter, préparer, décontaminer, dépolluer, découper un objet présent à l'extérieur de la manche, éventuellement confiné dans une enceinte à atmosphère contrôlée. L'invention peut donc être employée dans le domaine de l'industrie, par exemple nucléaire, dans les domaines de la dépollution et de la restauration d'objets.

### ÉTAT DE LA TECHNIQUE ANTÉRIEURE

La restauration, la préparation, la découpe ou la décontamination de surfaces, s'effectue généralement dans des milieux où l'atmosphère est contrôlée, pour éviter - lors du traitement - la contamination de l'environnement. Les moyens employés pour traiter les surfaces peuvent être de type mécanique, chimique, électrochimique ou bien électromagnétique.

Les moyens mécaniques, électrochimiques et chimiques nécessitent un contact direct avec la surface à traiter. Il ne peut donc pas y avoir de barrière physique entre ces derniers et la surface polluée. Ces moyens sont alors contaminés au cours du traitement et doivent à leur tour être traités, augmentant ainsi le coût global du procédé de décontamination.

Les ondes électromagnétiques offrent une alternative séduisante car elles permettent de décontaminer à distance une surface. En effet, une onde électromagnétique de fluence suffisante, peut échauffer rapidement la surface d'un objet et en éjecter la matière contaminée présente à sa surface. Cette technique nécessite une onde électromagnétique cohérente (spatialement et temporellement) focalisée sur la surface à traiter. De tels dispositifs de dépollution sont composés d'une source LASER et de moyens permettant d'amener et/ou de focaliser le faisceau LASER sur la surface polluée.

Une première approche consiste à placer une partie du dispositif de dépollution, en dehors de l'enceinte confinée, afin de limiter le phénomène de contamination dudit dispositif (FR 2 863 916). Le dispositif de pompage LASER est présent à l'extérieur de l'enceinte, tandis que la cavité LASER est placée dans l'enceinte, amenée au plus près de la surface polluée par des moyens de déplacement. La cavité LASER est excitée par le dispositif de pompage, par l'intermédiaire d'une fibre optique traversant une paroi de ladite enceinte.

Selon une autre approche, l'ensemble de la source LASER est placée en dehors de l'enceinte. Le faisceau LASER est alors amené au plus près de la surface à traiter, par l'intermédiaire d'une fibre optique traversant la paroi de protection et de moyens de déplacement (WO 95/27986).

Les dispositifs ci-dessus permettent de protéger une partie du dispositif de dépollution, sans pour autant apporter une solution permettant de protéger l'ensemble dudit dispositif. De plus, il est nécessaire d'introduire dans l'enceinte confinée des moyens supplémentaires pour permettre le déplacement de la zone d'émission du faisceau LASER, au plus près de la surface polluée (CA 2,070,265).

Une solution consiste alors à placer l'ensemble du dispositif de dépollution en dehors de l'enceinte de confinement et de réaliser le traitement à travers une paroi de l'enceinte. Les parois de l'enceinte sont composées de matériaux plus ou moins transparents à la longueur d'onde d'émission de la source LASER. La puissance et l'efficacité du faisceau LASER sont par conséquence réduites, voire inopérantes à l'intérieur de l'enceinte. Ce phénomène d'absorption peut être compensé par l'utilisation de LASER de plus forte fluence, augmentant le coût du traitement.

Un autre inconvénient lié à cette solution, concerne le réglage de la distance optimum entre la zone d'émission du faisceau LASER et la surface à traiter. L'efficacité du traitement est proportionnelle à la valeur de la fluence du faisceau LASER. Celle-ci est maximale au point de focalisation du faisceau LASER, la distance de focalisation est généralement de l'ordre de quelques centimètres. Pour respecter cette distance, l'opérateur doit donc déplacer la pièce par l'intermédiaire de moyens mécaniques présents dans l'enceinte qui sont à leur tour contaminés lors du traitement (FR 2 774 801, qui divulgue le préambule de la revendication 1). L'opérateur peut également déplacer manuellement l'objet à traiter, en étant protégé par exemple par un gant (JP 2003-185793). Il existe alors un risque non négligeable de dégradation des moyens mécaniques ou un déchirement du gant de l'opérateur, par le faisceau LASER, lors de la manipulation de l'objet à traiter. Cela peut alors avoir de graves conséquences pour la santé de l'opérateur et son environnement.

Il se pose donc toujours le problème de trouver un dispositif et un procédé permettant de traiter un objet pollué, présent dans une enceinte confinée, sans que la source LASER soit à son tour contaminée lors du traitement et en limitant fortement les risques de dégradation ou de rupture liés à l'utilisation de la source LASER.

### EXPOSÉ DE L'INVENTION

On décrit un dispositif, comportant une manche, de préférence souple, dont une première extrémité est obturée par une tape, au moins partiellement transparente, à un faisceau LASER émis par une source LASER.

La première extrémité de la manche peut être obturée de façon hermétique ou étanche.

Une tape est définie, au sens de l'invention, comme un dispositif composé d'un ou de plusieurs éléments, dont au moins une partie se superpose à ou remplit la première extrémité de la manche afin de l'obturer.

Une tape comporte également au moins une fenêtre ou lame, maintenue entre au moins deux supports.

Un premier support peut être traversé par un premier et un deuxième alésage, de diamètres différents et au moins partiellement alignés.

Un second support peut être traversé par un troisième alésage. Eventuellement, un quatrième alésage de diamètre supérieur au troisième alésage peut être au moins partiellement aligné avec le troisième alésage.

Le diamètre de la fenêtre est supérieur aux diamètres du premier et du troisième alésage, et inférieur aux diamètres du second et éventuellement quatrième alésage. Ainsi, la fenêtre peut être disposée dans le second alésage du premier support, ou éventuellement dans le quatrième alésage du second support. La fenêtre obture alors le premier et le troisième alésage. Les diamètres sont définis dans des plans perpendiculaires aux axes des alésages.

Les deux supports sont maintenus à proximité ou l'un contre l'autre, afin de maintenir la fenêtre entre eux. Autrement dit, la fenêtre peut être prise en étau entre le premier et le second support.

Un joint torique étanche peut être présent entre la fenêtre et le premier support et/ou le second support, afin de renforcer ou d'améliorer l'étanchéité entre le premier alésage et le troisième alésage.

Les alésages précédents sont au moins partiellement alignés pour permettre à au moins une partie d'un faisceau LASER de traverser la tape. Avantageusement, la fenêtre, le premier et troisième alésage sont de dimensions au moins égales aux dimensions du faisceau LASER, afin que l'intégralité du faisceau LASER puisse traverser la tape. Les dimensions du faisceau LASER sont définies dans un plan perpendiculaire à sa direction de propagation.

Le premier et le second support peuvent être maintenus en contact ou à proximité l'un de l'autre par des moyens de maintien, de préférence réversibles, afin de permettre le remplacement de la fenêtre, prise en étau entre ces deux supports.

Ces moyens de maintien peuvent être des surfaces filetées et/ou des vis de serrage et/ou de la colle et/ou des aimants.

La fenêtre de la tape est transparente à au moins une longueur d'onde d'émission de la source LASER.

La source laser utilisable selon l'invention émet un signal électromagnétique compris entre l'ultraviolet et l'infrarouge, de préférence dans l'infrarouge, plus particulièrement entre 900 nm et 1200 nm, de préférence encore entre 1045 nm et 1070 nm. La longueur d'onde d'émission de ladite source LASER est adaptée en fonction du traitement que l'on souhaite réaliser sur l'objet traité.

La valeur de transmittance de la fenêtre peut être supérieure à 90 %, de préférence supérieure à 95 % à une longueur d'onde d'émission de la source LASER. Ainsi, la fluence ou l'efficacité du faisceau LASER est peu, de préférence la moins possible atténuée lorsque le faisceau LASER traverse la fenêtre transparente. Autrement dit, on cherche à ce que l'efficacité du faisceau LASER soit la plus grande possible après avoir traversé ladite tape, ou bien que son intensité soit la moins réduite possible lors de la traversée de la fenêtre. Par exemple, la fenêtre peut être réalisée à partir d'un verre de silice fondue, dont la valeur de transmittance correspond à la gamme préférée ci-dessus.

La manche peut comporter des moyens de fixation permettant de maintenir une source LASER à proximité ou contre la tape, pour qu'au moins une partie de son faisceau LASER traverse ladite tape.

La source LASER peut être maintenue contre ou à proximité de la fenêtre et/ou de l'un des supports de la tape.

Les moyens de fixation peuvent comporter :
- au moins un premier élément présent sur la source LASER,
- au moins un second élément positionné sur la tape,
- au moins l'un des premiers éléments et au moins l'un des seconds éléments, coopérant ensemble pour maintenir la source LASER à proximité ou contre la tape.

Les moyens de fixation sont avantageusement réversibles, afin de permettre le montage et/ou le démontage de la source LASER à proximité ou contre la tape.

Ils peuvent également être adaptés aux dimensions, à la forme et éventuellement au poids de la source LASER. Les moyens de fixation peuvent être réglables et/ou repositionnables, pour s'adapter à des sources LASERs différentes.

Le premier et le second élément des moyens de fixation peuvent être des bandes de type auto-agrippante et/ou aimantées et/ou des dispositifs de maintien de type griffe ou grenouillère.

De préférence, la source LASER est maintenue perpendiculairement aux surfaces de la fenêtre par les moyens de fixation, afin de minimiser le phénomène d'absorption du faisceau LASER par la fenêtre, et éventuellement, les phénomènes de réfraction optique et/ou de réflexion optique.

Une première extrémité de la manche peut être en contact avec les bords externes de la tape, qui sont parallèles aux parois d'un des alésages précédents. La manche peut être maintenue contre ces bords par l'intermédiaire de bandes ou de joncs élastiques, maintenant de façon étanche ou hermétique, la surface interne de la manche audits bords.

Selon une alternative, la première extrémité de la manche peut être prise en étau entre le premier et le second support. Le premier et le second support peuvent alors comporter des éléments de surface de type mâle/femelle, coopérant ensemble pour améliorer le maintien de la manche entre les deux supports. Un ou plusieurs éléments peuvent également transpercer la manche au niveau des supports, pour compléter les moyens de fixation précédents, sans rompre l'étanchéité entre l'intérieur et l'extérieur de ladite manche.

Un ou plusieurs joncs élastiques peuvent être disposés entre la première extrémité de la manche et la tape, pour améliorer l'étanchéité entre l'intérieur et l'extérieur de la manche.

La manche et la tape forment alors une barrière physique entre la source LASER et l'environnement extérieur à la manche. Ainsi, la source LASER peut être introduite dans un environnement sans y être directement exposée.

La manche peut s'allonger et/ou se courber afin de permettre à la première extrémité de la manche de se déplacer et/ou de s'orienter dans un espace à une ou deux ou de préférence trois dimensions.

La manche peut être souple ou déformable ou flexible, afin de permettre sa déformation plastique selon au moins une dimension.

Par le terme « manche », on entend aussi une membrane, ou une enveloppe ou un sac, remplissant les mêmes fonctions.

Avantageusement, la source LASER peut être employée pour traiter un objet et/ou sa surface, situé à l'extérieur de la manche. L'objet peut être dans une enceinte confinée, éventuellement à atmosphère contrôlée. Le terme traiter est ici synonyme des termes suivants : préparer, décontaminer, dépolluer, découper. De même, dans la présente description de l'invention, le terme traitement désigne les termes suivant : préparation, décontamination, dépollution et découpe.

L'invention concerne également l'un des dispositifs précédents, permettant l'utilisation d'une source LASER au sein d'une enceinte confinée, sans contamination de ladite source, via l'utilisation d'une manche.

L'un des dispositifs précédents peut comporter un appendice de protection, recouvrant au moins totalement la face de la fenêtre extérieure à la manche et/ou au moins partiellement la face de la tape extérieure à la manche.

Afin de permettre le passage du faisceau LASER à travers l'appendice de protection, celui-ci est traversé par une voie ou un alésage reliant une première ouverture, se situant au niveau de son sommet, et une seconde ouverture se situant au niveau de sa base. La voie et les deux ouvertures sont au moins partiellement alignées avec au moins l'un des alésages précédents.

L'appendice de protection peut être relié à un dispositif d'aspiration par l'intermédiaire d'une troisième ouverture, afin d'évacuer une pollution présente à la périphérie de la première ouverture. Eventuellement, une quatrième ouverture peut être avantageusement présente à l'opposé de la troisième ouverture, afin de générer une lame ou un flux d'air devant la fenêtre. Le flux d'air peut être engendré par une aspiration ou niveau de la troisième ouverture et/ou par un soufflage au travers de la quatrième ouverture.

L'un des dispositifs précédents peut comporter un dispositif de maintien externe de la première extrémité de la manche, reliant une poignée à une surface de la tape, sans rompre le confinement de la manche. La poignée peut comporter un dispositif permettant de commander la source LASER présente dans la manche. C'est-à-dire, le dispositif de maintien externe à la manche ne rompt pas la barrière physique entre la source LASER et l'environnement comportant l'objet contaminé ou à traiter. Ce dispositif de maintien externe peut permettre à un opérateur ou un robot ou un bras téléopéré, présent à l'intérieur de l'enceinte dans laquelle l'objet à traiter est présent, de déplacer et/ou d'orienter la première extrémité de la manche, et éventuellement, la source LASER présente dans ladite manche.

Le dispositif de maintien externe peut comporter un collet ou une bague, pouvant maintenir la source LASER à travers la manche, sans exposer la source LASER à l'environnement extérieur de la manche. Le collet ou la bague peut ainsi transférer une partie du poids de la source LASER sur le dispositif de maintien externe. Le collet peut également permettre de compléter les moyens de fixation de la source LASER sur la tape, et permettre ainsi de faciliter le déplacement, l'orientation et le maintien de la source LASER dans la manche, lors de son utilisation.

La seconde extrémité de la manche peut être maintenue, avantageusement de façon hermétique, contre une paroi. Cette paroi peut délimiter une enceinte confinée dans laquelle se trouve un objet à traiter. La paroi est évidée au niveau de la manche afin de permettre le passage de la source LASER et/ou de la tape, et éventuellement un bras pour manipuler la source LASER. La seconde extrémité de la manche peut être maintenue par un dispositif de type à jonc ou de type La Calhène.

L'un des dispositifs précédents peut comporter une source LASER pour traiter et/ou préparer et/ou décontaminer et/ou dépolluer et/ou découper une surface ou un objet présent de l'autre côté de la tape par rapport à la source LASER. Celle-ci peut émettre un signal électromagnétique compris entre l'ultraviolet et l'infrarouge, de préférence dans l'infrarouge, plus particulièrement entre 900 nm et 1 200 nm, de préférence entre 1 045 nm et 1 070 nm. La longueur d'onde d'émission de ladite source LASER est adaptée en fonction du traitement que l'on souhaite réaliser sur l'objet traité.

L'invention concerne également un procédé de traitement d'un objet situé à l'extérieur d'une manche, ladite manche comportant une source LASER maintenue par des moyens de fixation contre ou à proximité d'une tape obturant une première extrémité de ladite manche, comportant les étapes suivantes :
- déplacement et/ou orientation de la source LASER à proximité de la surface à traiter, par un bras téléopéré ou un robot ou un opérateur,
- mise en fonctionnement de la source LASER, par le bras téléopéré ou l'opérateur, pour traiter la surface.

L'objet peut être présent à l'intérieur d'une enceinte confinée.

L'opérateur ou le bras téléopéré peut diriger et contrôler le fonctionnement de la source LASER soit, de l'intérieur de la manche, par exemple par l'intermédiaire de la source LASER, ou bien de l'extérieur de la manche, par l'intermédiaire du dispositif de maintien externe.

Le procédé de traitement peut comporter au moins une étape de montage et/ou de démontage de la source LASER sur la tape, ladite tape obturant la première extrémité de la manche.

Les dimensions du passage ou du trou pratiqué dans la paroi, au niveau de la seconde extrémité de la manche, peuvent être suffisantes pour permettre l'introduction de la tape. La manche peut être suffisamment souple pour passer partiellement ou complètement à travers ce passage, et ainsi être retournée ou ressortie à l'extérieur de l'enceinte confinée. L'étape précédente de montage et/ou de démontage peut alors être réalisée plus aisément lorsque la manche est retournée.

L'un des avantages de la manche est de pouvoir rapidement introduire et utiliser une source LASER dans l'enceinte confinée. Grâce à la manche, la source LASER est utilisée sans être exposée à l'atmosphère en contact avec l'objet ou la surface à traiter. De cette façon, un opérateur ou un bras téléopéré peut très simplement et dans un temps bref, remplacer la source LASER.

Le premier et le second support sont facilement démontables de façon à pouvoir remplacer ou décontaminer la fenêtre de la tape, après un procédé de traitement. Autrement dit, le premier et le second support sont séparables afin de pouvoir avoir accès facilement à la fenêtre et pouvoir la remplacer ou la nettoyer ou la décontaminer.

La tape et la fenêtre sont réalisées dans des matériaux et selon des géométries permettant de facilement les décontaminer.

### BRÈVE DESCRIPTION DES DESSINS

D'autres détails et caractéristiques de l'invention apparaîtront de la description qui va suivre, faite en regard des figures annexées suivantes. Les parties identiques, similaires ou équivalentes des différentes figures portent les mêmes références de façon à faciliter le passage d'une figure à une autre. Les différentes parties représentées sur les figures ne le sont pas nécessairement selon une échelle uniforme pour rendre les figures plus lisibles. Les repères indiqués sur les figures sont orthogonaux.

Sur la figure la est représenté un opérateur manipulant une source LASER, maintenue contre une tape obturant une manche. La tape et la manche protègent le LASER et l'opérateur, de l'environnement confiné dans lequel se trouve un objet à traiter.

Sur la figure 1b est représentée l'extrémité d'une manche, comportant une source LASER maintenue contre un support d'une tape obturant ladite manche.

Sur la figure 1c est représentée l'extrémité d'une manche, comportant une source LASER maintenue contre une fenêtre d'une tape obturant ladite manche.

Sur la figure 2 sont représentées deux courbes du pourcentage de transmittance (T) d'un signal de longueur d'onde λ, traversant une paroi de verre quelconque et non spécifique aux rayonnements infrarouge de 3 mm (a) et de 24 mm (b) d'épaisseur.

Sur la figure 3 est représenté le pourcentage de transmittance (T) d'un signal de longueur d'onde λ, traversant un verre de silice fondue d'une épaisseur 6,35 mm.

Sur les figures 4a et 4b est représenté un premier dispositif de tape.

Sur la figure 5 est représenté un second dispositif de tape.

Sur la figure 6 est représenté un troisième dispositif de tape.

Sur les figures 7a et 7b sont représentés en perspective, deux moyens de fixation possibles d'une source LASER sur une tape.

Sur la figure 8 sont représentés des moyens de fixation, de type griffe, permettant de maintenir une source LASER contre une tape.

Sur la figure 9 sont représentés des aimants permettant de maintenir une source LASER contre une tape.

Sur la figure 10 sont représentées des bandes auto-agrippantes permettant de maintenir une source LASER sur une tape.

Sur les figures 11a et 11b est représenté un appendice de protection en forme de cône permettant de limiter le dépôt d'éléments sur la fenêtre de la tape.

Sur la figure 12 est représenté un dispositif de maintien de la manche sur la tape représenté sur les figures 4a et 4b.

Sur la figure 13 est représenté un dispositif de maintien de la manche sur la tape représenté sur la figure 5.

Sur la figure 14 est représenté un dispositif de maintien de la manche sur la tape représenté sur la figure 6.

Sur la figure 15 est représenté un dispositif de maintien d'une manche sur une paroi.

Sur les figures 16a et 16b sont représentés un dispositif de maintien externe de l'extrémité d'une manche obturée par une tape avec ou sans le dispositif représenté sur les figures 11a et 11b.

Sur la figure 17 est représenté un dispositif de maintien externe figurant sur la figure 16b, comportant une bague de serrage de la manche.

Sur la figure 18 est représenté un opérateur à l'intérieur d'une enceinte confinée, manipulant une source LASER, maintenue contre une tape obturant une manche. La tape et la manche protègent le LASER de l'environnement confiné dans lequel se trouvent l'objet à traiter et l'opérateur.

Sur la figure 19 sont représentées des mesures de puissance d'une source LASER fixée dans une manche selon l'invention, la tape ne comportant pas de lame transparente (a), ladite tape comportant une lame transparente en verre de silice fondue (b), ladite tape comportant une lame transparente en verre (c) quelconque et non spécifique aux rayonnements infrarouge.

Sur les figures 20a et 20b sont représentées des photographies de surfaces traitées par une source LASER fixée dans une manche selon l'invention, la tape comportant une lame transparente en verre de silice fondue (figure 20a) ou une lame transparente en verre (c) (figure 20b).

### EXPOSÉ DÉTAILLÉ DE MODES DE RÉALISATION PARTICULIERS

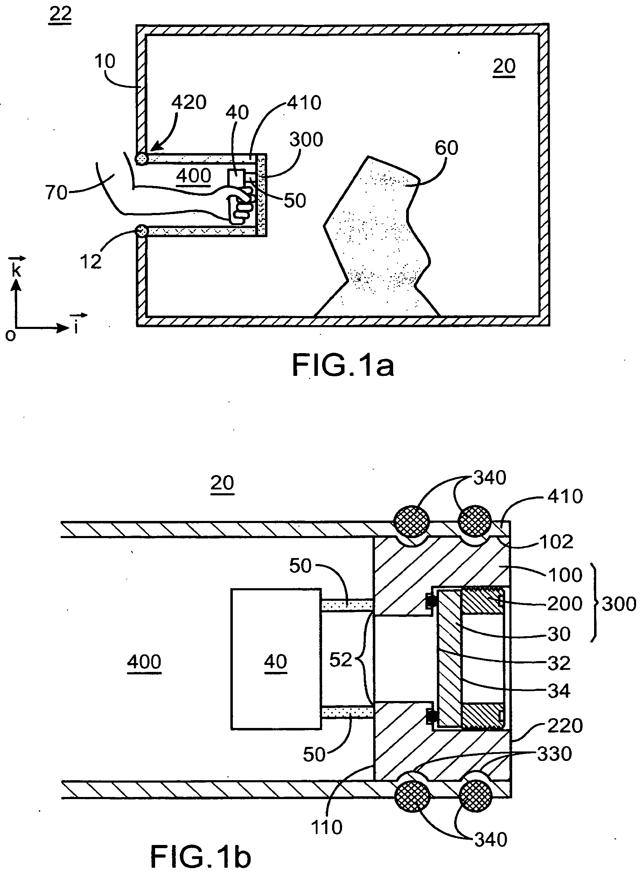

L'invention concerne un dispositif comportant une manche 400 dont une première extrémité 410 est obturée de manière hermétique par une tape 300 (figure 1a).

Une seconde extrémité 420 de la manche peut-être maintenue de façon étanche contre une paroi 10, délimitant une enceinte confinée 20, dans laquelle se situe un objet 60.

La tape 300 comporte un premier support 100, un second support 200 et une fenêtre 30 maintenue entre les deux supports (figure 1b). La fenêtre ou lame 30 est transparente à au moins une longueur d'onde d'émission d'une source LASER 40, pour permettre le traitement et/ou le découpage par la source LASER de l'objet 60. Ce dernier peut être contaminé et comporter des éléments dangereux pour l'environnement 22, extérieur à l'enceinte confinée 20. Par exemple, l'objet 60 peut être une pièce active, c'est-à-dire, un objet dont la contamination fait intrinsèquement partie de celui-ci. La contamination peut être présente à la surface ou proche de la surface de la pièce active. Sa décontamination peut consister à retirer la matière contaminée de l'objet à l'aide de la source LASER 40. Celle-ci peut émettre une onde électromagnétique ou un rayonnement LASER d'une longueur d'onde comprise entre 900 nm et 1 200 nm, ou entre 1 045 nm et 1 070 nm. En fonction de la fluence du rayonnement, une épaisseur plus ou moins importante de matière peut être éjectée de l'objet 60, permettant éventuellement de couper ce dernier.

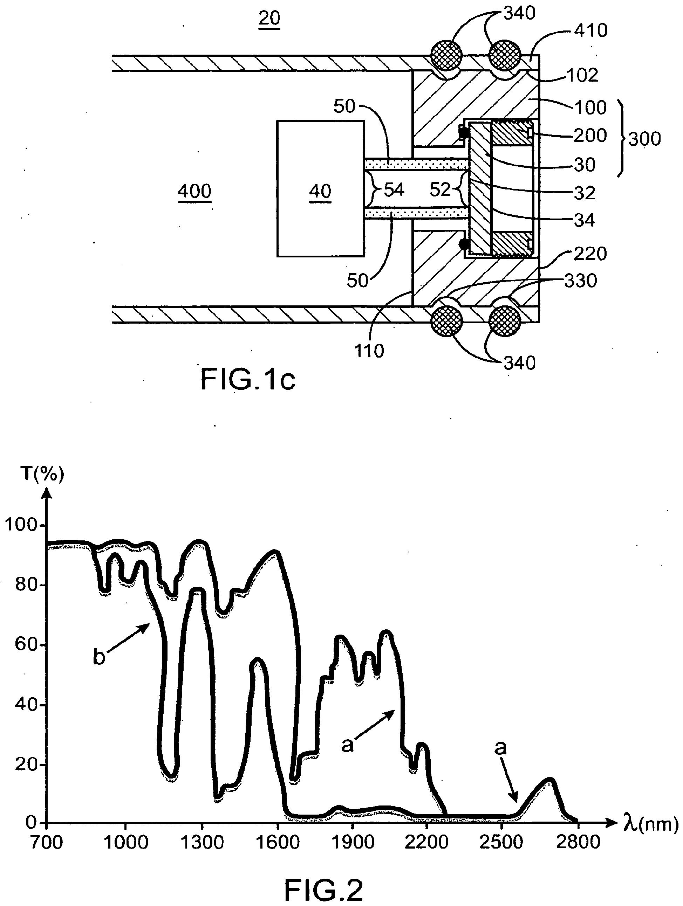

Sur la figure 1b, la source LASER est maintenue par l'intermédiaire de moyens de fixation 50, à un premier élément ou support 100 de la tape 300. Ces moyens de fixation 50, décrits ci-dessous, peuvent également maintenir la source LASER contre la fenêtre 30 (figure 1c).

La fenêtre 30 comporte deux faces 32 et 34, planes et parallèles entre elles, de dimensions suffisantes pour permettre à au moins une partie du rayonnement LASER de traverser la tape 300. Chacune des faces opposées de la fenêtre 30 peut avoir une forme circulaire, conférant à celle-ci une forme similaire à celle par exemple, des ronds de gant standard ou des ronds de la société « MELOX » (produit par exemple par la société Getinge La Calhène). Le diamètre des ronds de gant standard peut être compris entre quelques centimètres et plusieurs décimètres.

La fenêtre 30 est utilisée comme barrière physique entre la source LASER 40 et l'environnement 20 qui est au contact de l'objet 60. On préfère donc, pour des raisons de sécurité, ne pas diminuer l'épaisseur e, séparant les surfaces 32 et 34 de la fenêtre 30, en dessous d'une épaisseur critique, généralement comprise entre quelques millimètres et 1 centimètre ou plusieurs centimètres, de préférence entre 2 mm et 1 cm, par exemple égale à 6,35 mm. Le choix de la valeur de l'épaisseur e peut résulter d'un compromis entre une épaisseur permettant une bonne résistance mécanique, adaptée à son utilisation, et une épaisseur absorbant le moins d'intensité possible du faisceau LASER.

On connait des matériaux transparents réalisés à partir de matériaux thermoplastiques transparents, de type plexiglas^{®}, absorbant en fonction de leur épaisseur entre 8 % et 20 % d'un rayonnement infrarouge (figure 2). La transmittance T est alors au maximum de l'ordre de 80 %. Des sources LASERs de forte ou de très forte fluence sont alors nécessaires pour compenser ce phénomène d'absorption et traiter et/ou découper un objet actif 60.

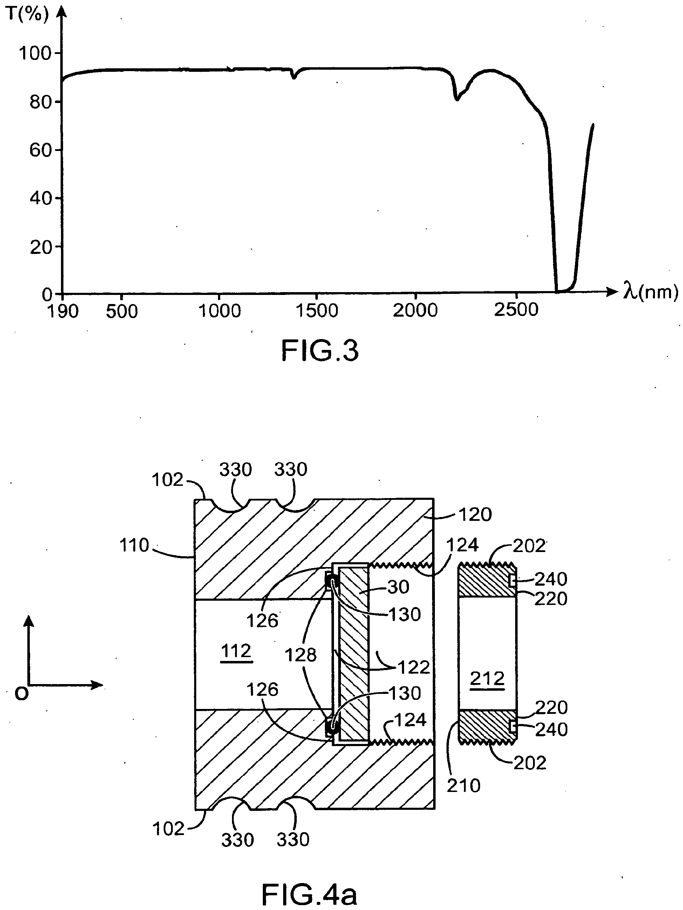

Selon la présente invention, on utilise avantageusement des verres de silice fondue ou en fluorure de magnésium ou bien en quartz pour réaliser des fenêtres 30. Les propriétés de transmittance de ces fenêtres sont supérieures aux matériaux précédents. Par exemple, les verres de silice fondue ont une valeur de transmittance T supérieure à 90% pour des longueurs d'ondes λ inférieures à 2 000 nm (figure 3). La transmittance de la fenêtre 30 est alors supérieure à 90%, de préférence supérieure à 95%, à la longueur d'onde d'émission de la source LASER 40, pour une épaisseur e appartenant aux gammes précédentes.

La fenêtre ou la lame transparente 30 est maintenue entre deux supports 100 et 200 (figures 1 b et 1c), formant après leur assemblage une tape 300.

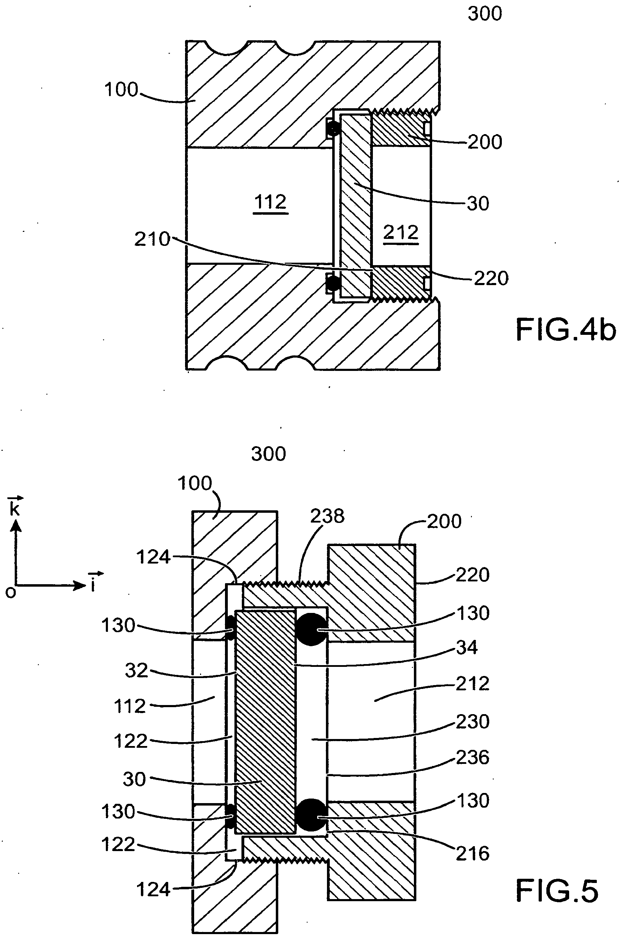

Une tape selon l'invention peut comporter un premier support 100, comportant une première face 110 plane et parallèle à une seconde face 120 (figure 4a). Ce support 100 est traversé par deux alésages 112 et 122, alignés selon un axe sensiblement perpendiculaire aux faces 110 et 120. Les diamètres des alésages sont différents et suffisants pour permettre le passage d'un rayonnement ou d'un faisceau LASER à travers le support 100. Comme on le voit sur la figure 4a, le diamètre de l'alésage 122 est supérieur à celui de l'alésage 112, afin de former une marche 126, parallèle aux faces 110 et 120, ou perpendiculaire à la direction de propagation du faisceau LASER traversant le premier support. La marche 126 peut comporter une gorge destinée à faciliter la mise en place d'un joint torique étanche 130 autour de l'alésage 112. Une fenêtre 30 est présente dans l'alésage 122, en appui sur le joint 130 et obturant l'alésage 112. La cavité 122, de section circulaire dans un plan [o;*̅j̅*̅;*̅k̅*̅], a ses bords internes 124 filetés (il s'agit donc ici d'un trou fileté). Ainsi, un second support ou un écrou, dans le cas présent un presse-étoupe 200, dont les bords externes 202 sont également filetés, peut être vissé à l'intérieur de la cavité 122. Eventuellement, une ou plusieurs encoches 240, présentes au niveau de la surface 220, peuvent faciliter le vissage ou le dévissage du second support dans le premier support. La fenêtre 30, entre le premier et le second support peut être pressée contre le joint d'étanchéité 130 par le presse-étoupe (figure 4b). Ainsi, la pression exercée sur la fenêtre 30 peut être contrôlée en fonction du nombre de rotation effectuée par le presse-étoupe dans le premier support. Le presse-étoupe 200 comporte également un taraudage 212 en son centre, pour permettre à au moins une partie du faisceau LASER de traverser le premier et le second support.

Selon une variante de la tape précédente, le second support 200 est de structure similaire au premier support 100 précédent et comporte deux alésages 212 et 230 (figure 5). Le diamètre de l'alésage 230 est supérieur à celui de l'alésage 212 afin de former une marche 216 parallèle à la face 220, ou perpendiculaire à la direction de propagation du faisceau LASER traversant le second support 200. Une fenêtre 30 de diamètre sensiblement voisin de, ou légèrement inférieur à, celui de l'alésage 230 est placée entre le premier support et la marche 216 du second support. La surface extérieure du second support 200, située autour de l'alésage 230, est filetée et destinée à être vissée à l'intérieure du trou fileté 122 du premier support. Ainsi, le second support peut être vissé dans le premier support 100 et exercer une pression sur la face 34 de la lame 30. La fenêtre prise en étau entre le premier et le second support peut alors isolée de façon hermétique les cavités 112 et 212. Là encore, pour améliorer l'étanchéité, un joint torique étanche 130 peut être placé entre la fenêtre et le premier support et/ou entre la fenêtre et le second support.

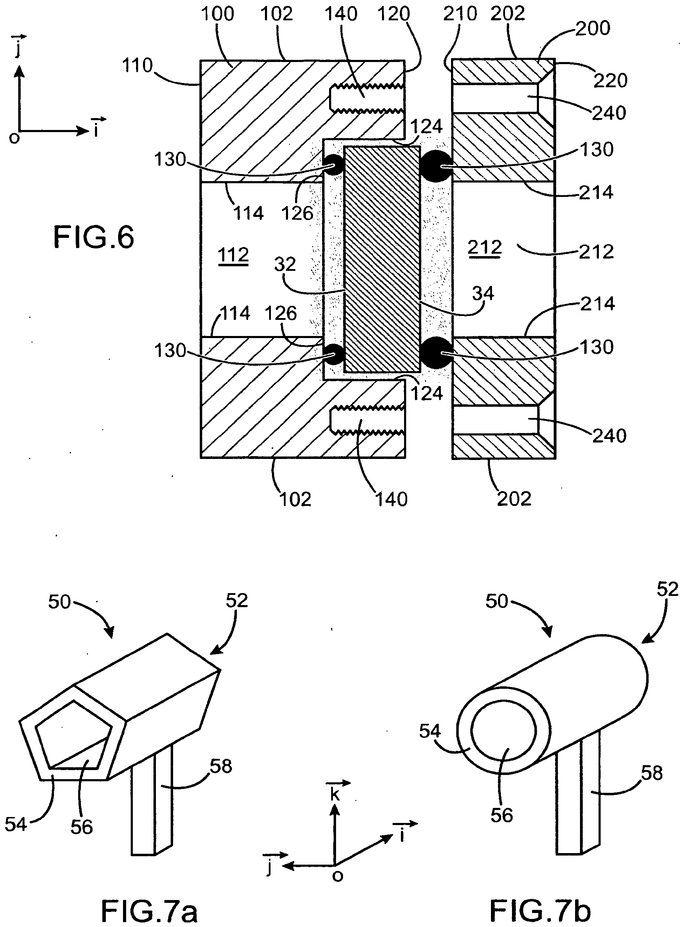

Selon une autre variante des tapes précédentes, les surfaces 124 et 202 des deux supports ne sont pas filetées (figure 6). La distance séparant la marche 126 de la seconde face 120 est égale ou inférieure à l'épaisseur e de la fenêtre 30, de sorte que celle-ci affleure ou dépasse la surface 120 du premier support lorsqu'elle est en appui contre la marche 126. Le second support 200 est de dimension suffisante pour recouvrir complétement la cavité 122. Une surface 32 de la fenêtre 30 est alors en appuie contre la surface 126. Une partie de la surface 210 est en appui sur une partie périphérique de la surface 34 de ladite fenêtre. Des moyens (non représentées), passant par des alésages 240 traversant le second support, peuvent permettre de maintenir le premier support à proximité ou contre le second support. Ces moyens peuvent par exemple être des vis de serrage, vissées dans les trous filetés 140 présent au niveau de la face 120 du premier support. Les vis de serrage permettent ainsi d'exercer indirectement une pression sur la fenêtre 30, afin que cette dernière isole les alésages 112 et 212.

Avantageusement, un ou plusieurs joints toriques étanches 130 peuvent être placés entre la fenêtre 30 et le premier et/ou le deuxième support, afin d'améliorer l'étanchéité entre ces deux alésages.

Selon cette variante, les alésages 112, 122 et 212 sont alignés et la section de chaque alésage peut être ovale, carrée ou rectangulaire (dans un plan [o;*̅j̅*̅;*̅k̅*̅]). Ainsi, plusieurs formes de fenêtre 30 peuvent être utilisées pour s'adapter au faisceau LASER traversant la tape.

La tape peut également comporter des moyens de fixation 50, permettant de maintenir de façon permanente ou non, une source LASER 40 en contact ou à proximité de la fenêtre 30. Ces moyens 50 peuvent être découpés, moulés, usinés à partir de matériaux possédant une rigidité suffisante pour garder constante la distance entre une première extrémité 52 et une seconde extrémité 54, comme illustré sur les figures 7a et 7b. La première extrémité ou face avant 52 des moyens de fixation 50 est destinée à être mise en contact avec une face (32 ou 34) de la fenêtre 30 ou en contact avec une surface (110 ou 220) de la tape 300 (figures 1b et 1c). La face avant 52 peut être fixée de façon permanente au contact d'une des surfaces précédentes, par application d'une colle entre les surfaces assemblées. La face avant 52 peut également être maintenue de façon non permanente par des moyens de maintien amovibles tels que des vis, des ventoùses ou des aimants, solidaires des moyens de fixation 50 et disposés de façon non permanente sur une surface (32 ou 34) de la lame 30 et/ou une surface (110 ou 220) de la tape 300.

La face arrière 54 des moyens de fixation 50 peut être en contact avec un ou plusieurs éléments de surface de la source LASER 40, de sorte que sa face avant, face par laquelle le faisceau LASER est émis, soit en vis-à-vis de la lame transparente 30. Avantageusement, les moyens de fixation 50 permettent d'orienter le faisceau LASER de façon à minimiser les phénomènes de réfraction et/ou de réflexion optique sur la tape 300.

De préférence, la distance séparant la face avant 52 de la face arrière 54 est la plus petite possible, afin que le point de focalisation du faisceau LASER soit le plus éloigné de la lame 30.

Les moyens de fixation 50 peuvent être un conduit cylindrique creux 56, à section polygonale ou circulaire dans un plan [o;*̅j̅*̅;*̅k̅*̅]. Les dimensions de ce conduit sont adaptées à la source LASER et au faisceau qu'elle émet. Par exemple, la source LASER 40 ou bien une fibre optique dont une première extrémité est reliée à ladite source, peut être emboitée dans le conduit 56 afin d'être maintenue à proximité ou contre la lame 30, soit par des moyens de serrage (vis traversant l'une des parois du conduit), soit par les forces de frottement entre la source d'émission du faisceau LASER et le conduit 56.

Les moyens de fixation 50 peuvent éventuellement comporter un appendice ou une poignée (non représentée sur les figures) destinée à faciliter l'orientation de la tape 300 par un opérateur 700 ou un bras téléopéré 70 d'un robot.

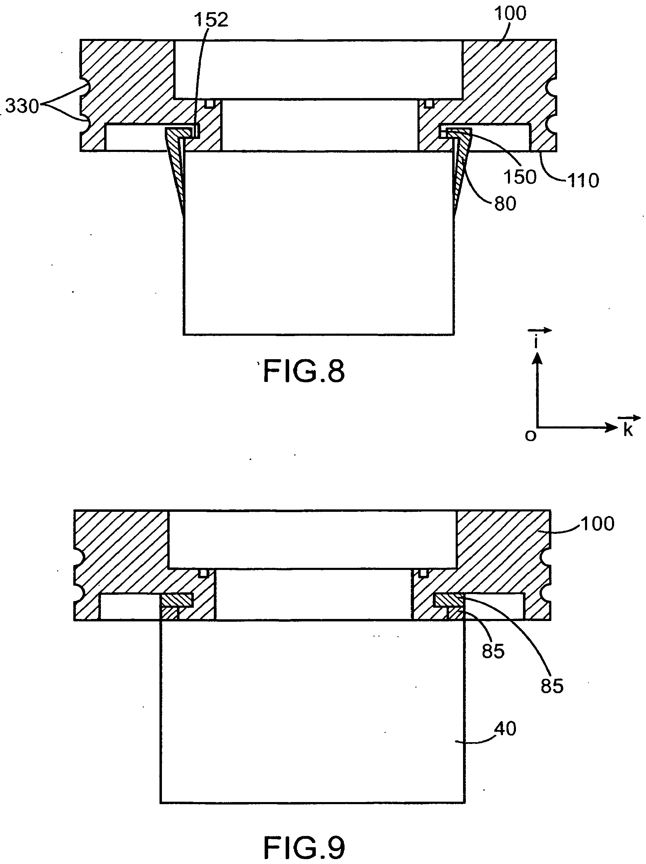

La source LASER 40, présente dans la manche 400 peut également être maintenue sur la tape 300 par l'intermédiaire d'un système de fermeture réversible 80 de type griffe (figure 8).

Le premier support 100 peut comporter un alésage 150, comportant une surface plane 152 perpendiculaire à l'alésage, tel que représenté sur la figure 8. Cette surface plane 152 sert d'appui pour le système de fermeture 80, dit à griffe. Ce système de fermeture fixé sur la source LASER 40, permet de maintenir cette dernière contre la surface 110 du premier support 100.

Selon une variante du dispositif précédent, des aimants 85 peuvent être fixés sur la source LASER 40 et dans l'alésage 150, de sorte à pouvoir coopérer ensemble et maintenir la source LASER contre la surface 110 du premier support.

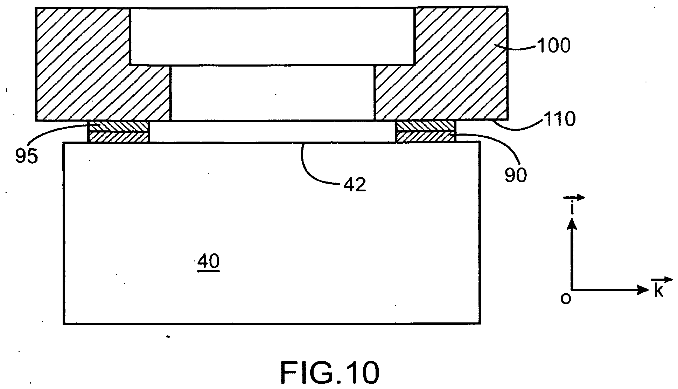

Les aimants peuvent être complétés ou substitués par des bandes adhésives de type auto-agrippante 90 et 95 (figure 10). Ces bandes s'agrippent entre-elles de façon réversible lorsqu'elles sont en contact. Une première bande auto-agrippante 90 peut être fixée de façon permanente ou non permanente, par exemple par collage, sur la face avant 42 de la source LASER 40 (figure 10). Une seconde bande auto-agrippante 95 peut être fixée de façon permanente ou non permanente, sur la surface 110 du support 100. La position de la seconde bande auto-agrippante 95 sur la tape 300 est choisie de sorte que, lorsque la première bande 90 et la seconde bande 95 sont en contact, le faisceau de la torche LASER passe à travers la tape 300. Pour renforcer ou augmenter le maintien de la source LASER 40 avec la tape 300, plusieurs bandes auto-agrippantes (90/95) peuvent être employées.

L'un des dispositifs précédents peut comporter un appendice ou appendice de protection 600 recouvrant au moins la face 34 de la fenêtre 30 qui est à l'extérieure de la manche 400. Cet appendice peut être un cône 605 comportant une base 610. Le sommet du cône 605 comporte une ouverture 620, en regard avec une ouverture 630 présente au niveau de sa base 610. Le cône est évidé en son centre afin de permettre à un faisceau LASER de traverser les ouvertures 620 et 630. La base 610 est maintenue contre une face de la tape 300. Les ouvertures 620 et 630 sont alignées avec la cavité 112, afin de permettre à un faisceau LASER de traverser, au moins partiellement, la tape 300 et l'appendice 600.

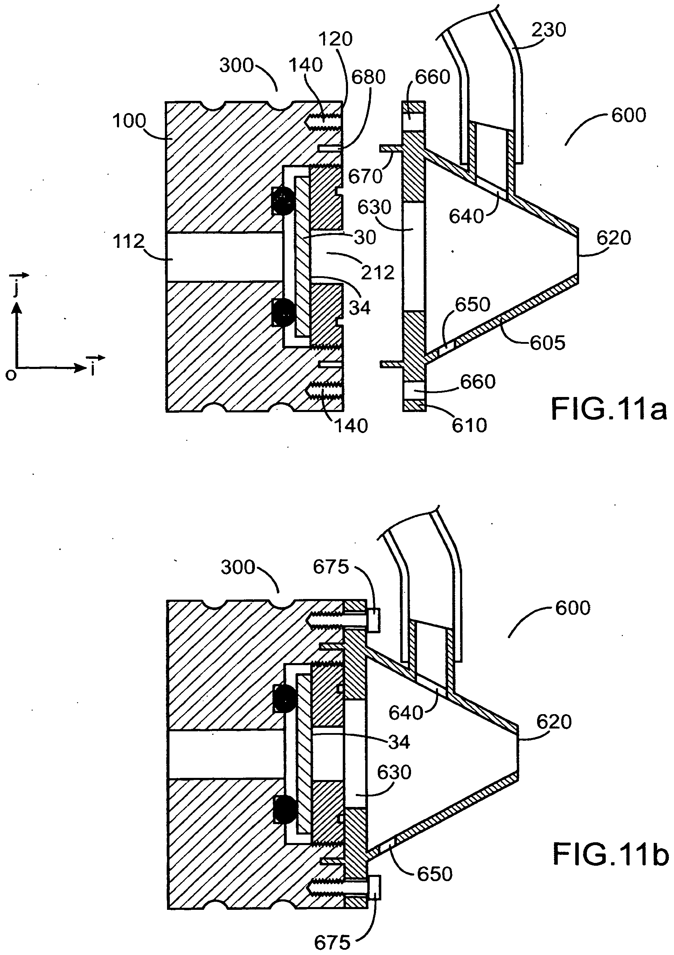

Eventuellement, la base 610 peut comporter un appendice 670 destiné à s'emboîter dans un alésage 680, présent au niveau de la tape 300, pour faciliter le positionnement de l'appendice 600 sur la tape 300 (figures 11a et 11b).

Une ou plusieurs voies peuvent traverser la base 610 afin de permettre le maintien du cône 600, grâce à des vis de serrage 675 vissées dans des cavités filetées 140 présentes dans la tape 300. Eventuellement, les vis de serrage 675 peuvent également permettre de maintenir le second support 200 contre le premier support 100. Le cône 600 peut également être maintenu sur la tape 300 par collage ou autre.

Le cône peut comporter une ouverture 640, éventuellement reliée à un tube 230, connecté à un dispositif d'aspiration non représenté sur les figures 11a et 11b.

Le cône 605 peut également comporter une ouverture 650, en vis-à-vis de l'ouverture précédente, afin de permettre l'écoulement d'une lame d'air ou d'un flux d'air, entre les ouvertures 640 et 650. Avantageusement, les ouvertures 640 et 650 sont placées de sorte que la lame d'air empêche ou limite le dépôt de matière sur la fenêtre 30.

A présent, nous allons décrire la manche 400 dont une extrémité 410 est obturée par une des tapes ci-dessus (figure 1a).

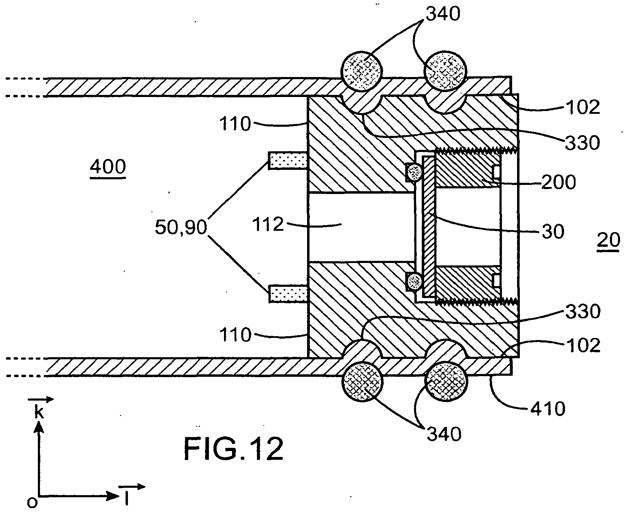

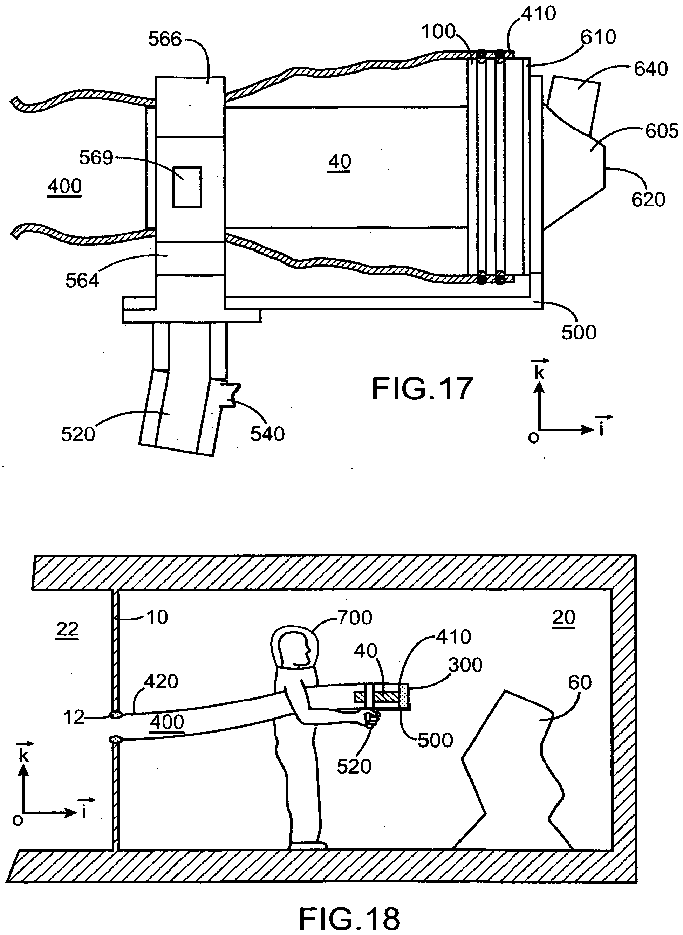

La manche 400 peut avoir une section de forme carrée, rectangulaire, ovale ou circulaire. La section de la manche est ici définie selon un plan perpendiculaire à l'axe *̅i̅*̅ (figure 12). La section de la manche permet l'introduction d'au moins une source LASER 40 et éventuellement d'un bras 70 pour la manipuler. À titre d'exemple, son diamètre peut être compris entre 150 et 500 mm ou entre 250 et 300 mm. La manche a une longueur selon l'axe [0 ;*̅i̅*̅] pouvant être comprise entre quelques centimètres, par exemple 10 cm et plusieurs mètres, par exemple 10 m ou 50 m. La longueur de la manche est choisie en fonction des dimensions de l'enceinte confinée dans laquelle elle est introduite. Par exemple, pour une utilisation dans une boîte de type boîte à gants (figure 1a), on choisit une manche de l'ordre de quelques dizaines de cm, et pour une utilisation dans des volumes confinés plus importants, de type sas ou hall de bâtiment (figure 18), on choisit une manche de l'ordre de quelques dizaines de mètres.

L'épaisseur du matériau composant la manche peut être comprise entre 15/100^{ème} *mm* et 30/100^{éme} mm. Les épaisseurs peuvent correspondre aux épaisseurs des films vinyles pouvant être utilisées en milieu nucléaire. La manche peut être composée de matériaux suffisamment souples pour permettre son déplacement et éventuellement sa déformation plastique dans n'importe quelle direction. Avantageusement, la surface interne de la manche est lisse ou non rugueuse, afin de diminuer les forces de frottement lors de l'introduction d'un objet dans la manche. Les matériaux pouvant composer la manche peuvent être du type polychlorure de vinyle (PVC), polyéthylène ou du polyuréthane.

La manche est fixée ou maintenue sur une tape 300, par tous moyens permettant de confiner, de préférence d'isoler de façon hermétique, les milieux présents de chaque côté de la tape. Plusieurs dispositifs de maintien de la manche, sur les tapes ci-dessus, sont décrits ci-après.

La tape 300 de la figure 1b peut être maintenue à l'extrémité 410 de la manche 400 par l'intermédiaire d'au moins une bande 340. La surface 102 du premier support 100, perpendiculaire à la surface 110, peut comporter au moins une gorge 330, parallèle à la face 110 (figure 12). La ou les gorges 330 ont une largeur et une profondeur adaptées à l'épaisseur de la manche 400 et à la forme d'un jonc 340, pour qu'au moins un jonc 340 puisse maintenir l'extrémité 410 de la manche 400 dans au moins une gorge 330. La ou les bandes maintiennent l'extrémité la manche 400 sur la tape 300, de sorte que la première extrémité 410 de la manche comportant la tape 300 soit étanche. Les gorges font avantageusement tout le tour de la tape 300, pour permettre une étanchéité optimale entre la manche et la tape.

La ou les bandes 340 peuvent être des bandes élastiques, des joncs élastiques ou bien des colliers de serrage.

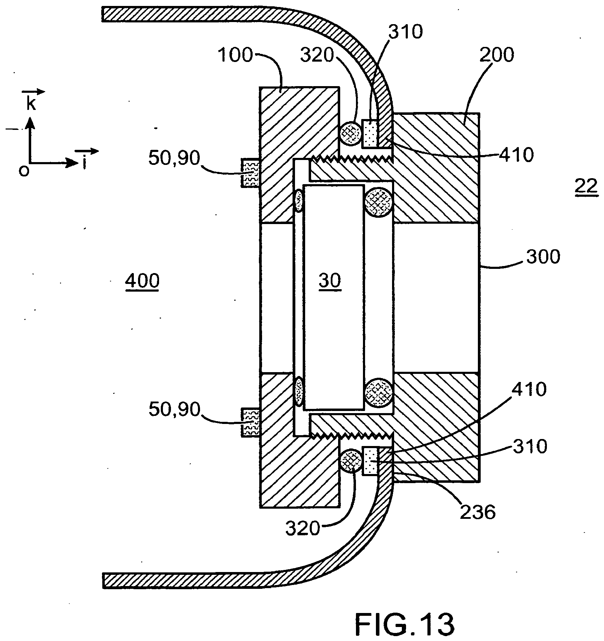

La tape 300, représentée en figure 5, peut être maintenue à une extrémité 410 de la manche 400 en étant prise en étau entre une surface 236 du second support 200 et une rondelle 310 évidée en son centre (figure 13). Une pression peut être exercée sur la rondelle 310, par l'intermédiaire d'un second joint torique 320, disposé entre le premier support 100 et la rondelle 310. Lors de l'assemblage du premier support avec le second support, le joint 320 et la rondelle 310 maintiennent de façon étanche, l'extrémité 410 de la manche 400 contre la surface 236 du second support 200.

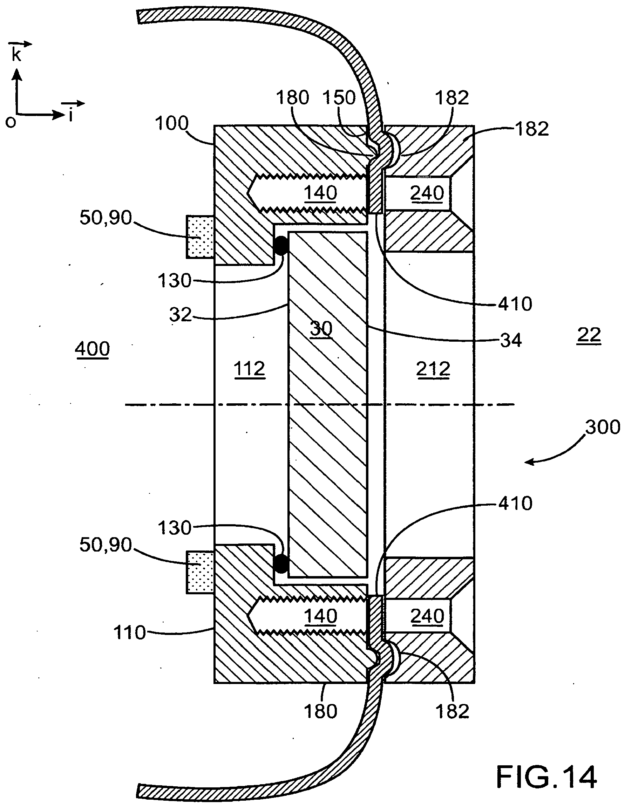

L'extrémité 410 de la manche 400 peut être maintenue sur une tape représentée en figure 6, en plaçant une première extrémité 410 de la manche entre le premier support 100 et le deuxième support 200, avant leur assemblage (figure 14). Le premier support 100 peut comporter sur sa surface 120 une ou plusieurs excroissances 180 de type mâle. Le second support peut alors comporter sur sa surface 210 une ou plusieurs encoches 182 de type femelle, de sorte que lorsque le premier et le second support sont assemblés, les protubérances 180 remplissent les cavités 182. Les extrémités 410 de la manche 400 sont placées entre au moins une excroissance 180 coopérant avec au moins une encoche 182 ainsi, lorsque les supports 100 et 200 sont maintenus ensemble, la manche 400 est maintenue entre les deux supports de façon hermétique. Les extrémités 410 de la manche peuvent être également placées entre les alésages 140 et 240, afin que la manche soit transpercée lors de l'introduction de vis de serrage dans lesdits alésages. Le percement de l'extrémité 410 de la manche par les vis de serrage peut empêcher le déplacement de l'extrémité de la manche 410 entre les supports 100 et 200, avant ou après leur assemblage.

La seconde extrémité 420 de la manche 400 peut être maintenue par un dispositif 12, de façon étanche ou hermétique, sur une paroi ou une cloison 10, appartenant à une enceinte de confinement ou un espace à atmosphère contrôlée 20 (figure 1a).

La paroi 10 peut être de type plastique, métallique ou autre. Par exemple, une des parois de l'enceinte confinée 20 peut être un mur dans lequel est pratiqué une ouverture ou un passage pour y maintenir ladite manche. Le trou traversant la paroi 10, permet avantageusement le passage de la source LASER 40, éventuellement un bras 70 afin de permettre le montage et/ou le démontage de ladite source LASER sur la tape 300. Le trou ou le passage traversant la paroi 10 peut également être de dimensions suffisantes pour permettre de sortir de l'enceinte confinée, la tape 300 attachée de façon hermétique à la première extrémité 410 de la manche 400. Le montage et/ou le démontage de la source LASER 40 sur la tape 300 peut ainsi être facilité lorsque la manche 400 est retournée à l'extérieur de l'enceinte de confinement 20.

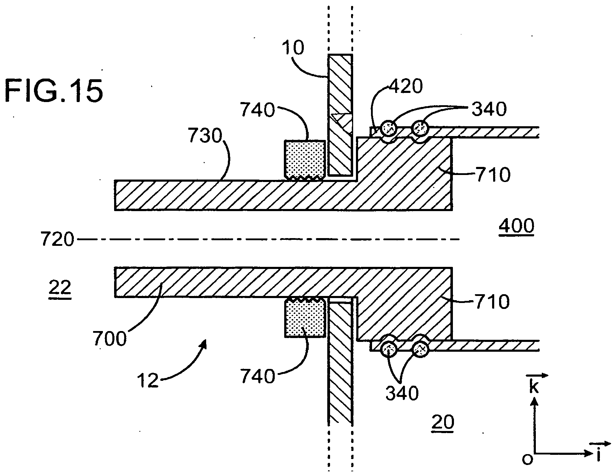

Un exemple de dispositifs 12 permettant de maintenir la seconde extrémité 420 de la manche 400 à une paroi 10, est illustré sur la figure 15.

La paroi 10 peut être traversée par un rond de gant 700, comportant une première extrémité 710 perpendiculaire à l'axe 720 du rond de gant (figure 15). La surface externe 730 du rond de gant peut être filetée pour permettre le vissage d'un écrou 740, permettant de maintenir la paroi 10 entre l'écrou et l'extrémité 710. Eventuellement un joint torique étanche peut être placé entre l'écrou 740 et la paroi 10 et/ou entre la paroi et l'extrémité 710.

L'extrémité 420 de la manche 400 peut être maintenue de façon hermétique contre le bord externe de l'extrémité 710, par l'intermédiaire de joncs ou bandes élastiques de type 340, comme représenté sur la figure 15. Les bords externes de l'extrémité 710 peuvent comporter une ou plusieurs rainures de façon à favoriser le maintien hermétique de la manche sur le dispositif 12.

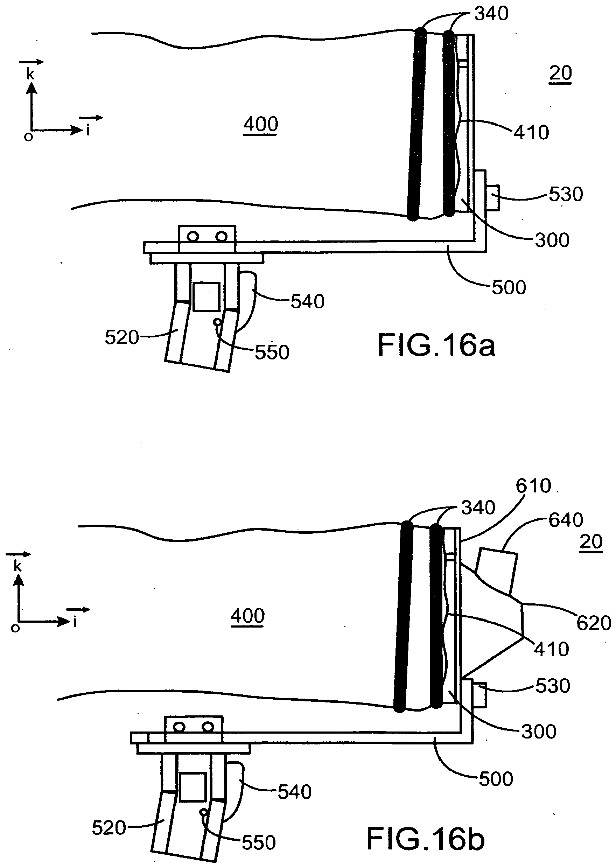

Selon l'invention, la source LASER 40 peut être manipulée par un opérateur 700 ou un bras téléopéré 70, tous deux étant protégés par la manche 400 de l'environnement confiné 20 (figure 1a). Le déplacement de la source LASER peut alors être limité par la longueur du bras 70. Afin de s'affranchir de cette limitation, la tape 300 peut comporter un dispositif de maintien 500, externe à la manche 400 (figures 16a à 17). Le dispositif de maintien externe 500 peut être maintenu contre la tape 300, sans rompre l'étanchéité de la manche 400.

Le dispositif de maintien externe 500 comporte un appendice ou une poignée 520, reliée à une face de la tape 300 externe à la manche 400, par l'intermédiaire d'un support 500 (figure 16a). Le support 500 peut être réalisé à partir d'un matériau suffisamment rigide pour ne pas rompre ou ne pas se déformer lors de son utilisation, par exemple de type plastique, métallique ou autre. Ce dispositif est solidaire de la tape 300, par l'intermédiaire des moyens de fixation 530. Ces moyens de fixation peuvent comporter une ou plusieurs vis de serrage traversant le support 500, vissées dans des pas de vis présents par exemple, sur une face de la tape 300 non recouverte par la manche 400. La poignée 520 peut comporter une gâchette 540 permettant de contrôler le fonctionnement de la source LASER 40, présente dans la manche 400. Un dispositif 550 relié à la gâchette 540 peut permettre de transmettre les commandes de la gâchette à la source LASER 40, par l'intermédiaire d'un système de transmission filaire ou sans fil (WIFI, RFID).

Selon une alternative, le dispositif précédent peut comporter l'appendice 600 décrit précédemment (figure 16b).

La source LASER 40 présente dans la manche 400 et fixée sur la tape 300, peut également être maintenue par une bague de serrage ou un collet, reliée au dispositif 500 (figure 17). La bague de serrage ou bague 560 peut comporter une première partie 564 et une seconde partie 566. Les dimensions et la forme de la bague ou du collet 560 sont adaptées à la source LASER 40. La première partie 564 et la seconde partie 566 peuvent être maintenues ensemble, par l'intermédiaire d'un dispositif de maintien 569, de type grenouillère.

Ce dispositif de maintien externe 500 est avantageusement utilisé pour compléter les moyens de fixation 50 de la source LASER sur la tape 300. Il permet ainsi de maintenir l'alignement de la source LASER 40 avec la fenêtre transparente 30, tout en simplifiant la manipulation de l'ensemble source LASER 40 - tape 300, depuis l'intérieur du confinement 20 sans rompre le confinement de la manche 400.

Selon une alternative, le dispositif précédent peut comporter l'appendice 600 décrit précédemment (figure 17).

Le dispositif de maintien externe 500 peut ainsi permettre à un opérateur 700 ou à un bras téléopéré 70, présent à l'intérieur de l'enceinte confinée 20, de déplacer et/ou d'orienter l'ensemble source LASER 40 et tape 300 indépendamment de la longueur du bras tenant ledit dispositif (figure 18).

La présente demande porte également sur un procédé de décontamination et/ou de découpe d'une surface ou d'un objet 60, présent dans une enceinte confinée 20.

Ce procédé peut mettre en oeuvre l'un des dispositifs précédents, comportant une source LASER 40 fixée par l'intermédiaire de moyens de fixation 50 à une tape 300, cette dernière obturant de façon étanche une première extrémité 410 d'une manche 400. La seconde extrémité 420 de ladite manche peut être ouverte sur un environnement 22 extérieur à l'enceinte de confinement 20. La manche 400 et la tape 300 protègent ainsi la source LASER de l'environnement présent dans l'enceinte confinée 20.

Un procédé de traitement et/ou de découpe peut comporter une étape de montage et/ou de démontage de la source LASER 40 sur l'un des supports composant la tape et/ou sur la fenêtre 30. Le montage ou le démontage de la source LASER 40 peut être réalisé soit lorsque la tape 300 est à l'intérieur de l'enceinte confinée 20 ou bien à l'extérieur de celle-ci. Avantageusement, la manche 400 peut être retournée à l'extérieur de l'enceinte confinée 20 pour faciliter le montage et/ou le démontage de la source LASER sur la tape 300. Dans ce cas, la tape est alors réintroduite dans l'enceinte confinée lorsque la source LASER est fixée sur la tape 300.

Un bras 70 peut être introduit dans la manche 400 pour saisir la source LASER 40 ou un appendice appartenant aux moyens de fixation 50.

Le bras téléopéré 70 ou bien un opérateur 700 peut déplacer et/ou orienter l'extrémité 410 de la manche 400, à proximité de la surface ou de l'objet 60.

Lorsque la source LASER est orientée et placée à une distance optimum de la surface 60, le bras 70 peut déclencher le fonctionnement de la source LASER 40 pour traiter et/ou découper la surface 60.

La source LASER peut être déplacée et/ou orientée autour de l'objet lors de son fonctionnement.

La source LASER peut être démontée de la tape 300 dans la manche 400 ou bien à l'extérieur de celle-ci.

L'efficacité d'un procédé de dépollution d'une surface active, à partir d'un dispositif précédent, est reportée ci-dessous.

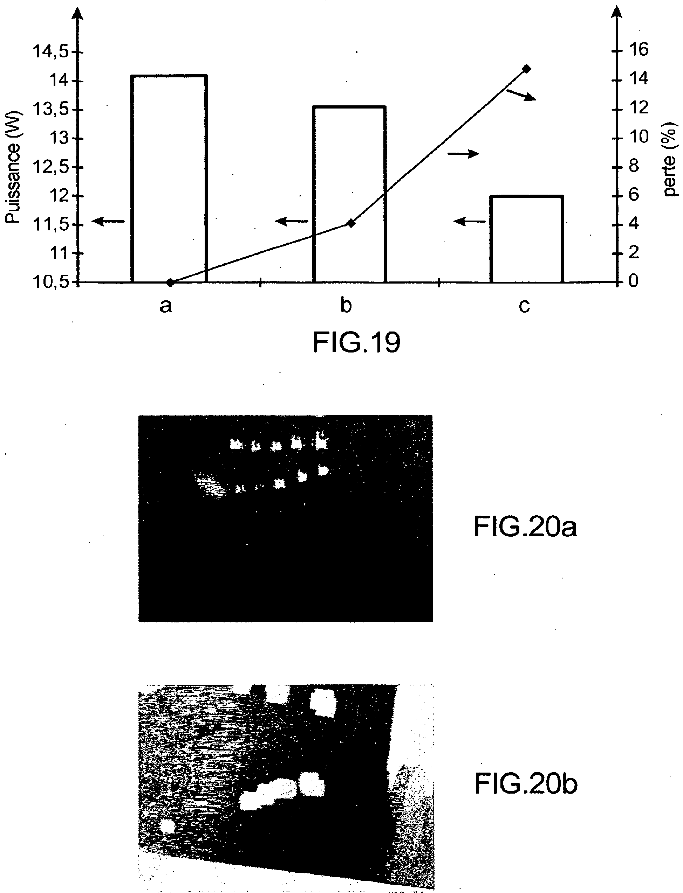

Une source LASER 40 de type LASER solide YAG, émettant à 1 064 nm, est fixée à proximité d'une lame 30. La face avant de la source LASER est située à environ 19,50 mm de la lame 30. Le tableau 1 et la figure 19 donnent les mesures de puissance de la source LASER passant à travers la tape 300, en fonction de la nature de la lame transparente 30. Les différentes fenêtres ou lames transparentes ou lames sont d'épaisseur similaire (par exemple de l'ordre de 7 mm). Les puissances sont mesurées en focalisant le faisceau de la source LASER 40 sur la cellule de détection d'un calorimètre.

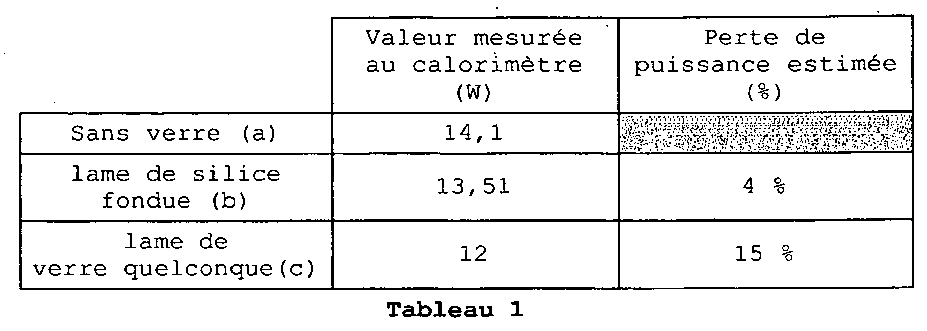

Une première mesure (a) est réalisée sans que le faisceau LASER ne passe à travers une lame 30, la mesure est appelée « sans verre » ou mesure a.

Une seconde mesure (b) est réalisée lorsque le faisceau LASER passe à travers une lame transparente 30 selon l'invention, c'est-à-dire, une lame de silice fondue.

Une troisième mesure (c) est effectuée en substituant la lame précédente par une lame de verre quelconque et non spécifique aux rayonnements infrarouges.

Les mesures de puissance calorimétrique sont données dans la seconde colonne du tableau 1. L'estimation de la perte de puissance par rapport à la mesure « sans verre » est notée dans la troisième colonne du tableau. Ces valeurs figurent également sur la figure 19. On constate sur le tableau 1 et la figure 19 que la perte de puissance du LASER, à travers le verre de silice fondue, est réduite d'au moins un facteur 3 par rapport à une lame en verre quelconque et non spécifique aux rayonnements infrarouges (c). La perte est de l'ordre de 4 % avec le verre de silice fondue (a), elle est de 15 % avec la lame verre quelconque (c).

L'utilisation d'un verre de silice fondue offre donc l'avantage d'absorber moins d'énergie, des LASERs de moindre fluence peuvent ainsi être employés pour des résultats similaires à ceux obtenus en utilisant des lames de verre quelconque.

L'avantage du verre de silice fondue par rapport aux lames de verre quelconque et non spécifique aux rayonnements infrarouges est illustré sur les figures 20a et 20b. Ce sont des photos d'une surface en inox, recouverte d'une encre de traçage de chaudronnier sombre (SPECTRACOLOR Bearing Blue, Ref: 297612, distribuée par ORAPI), dont la surface a été traitée par le faisceau LASER de la source 40 à travers une lame transparente en verre quelconque (figure 20a) ou une lame transparente 30 en verre de silice fondue (figure 20b). L'encre représente la contamination ou la pollution présente sur la surface en inox. Le traitement LASER permet de retirer l'encre présente à la surface de la plaque en inox, laissant apparaître la couleur clair du métal.

On constate que le traitement LASER, au travers d'une lame en verre quelconque ne retire pas totalement l'encre sur la surface en inox (figure 20a). Par contre, sur la figure 20b, le traitement LASER ablate la peinture de façon homogène, laissant des surfaces claires donc propres. Pour une même fluence émise, le verre de type de silice fondue atténue donc moins le faisceau LASER par rapport à une lame en verre quelconque et non spécifique aux rayonnements infrarouges, et permet donc un traitement de surface plus efficace pour une même puissance ou fluence LASER.

La présente invention décrit un dispositif ainsi qu'un procédé, permettant de traiter ou de décontaminer la surface d'un objet polluée ou contaminée avec une source LASER, sans contaminer ladite source LASER.

La source LASER est avantageusement fixée sur une tape transparente, obturant de façon étanche, une première extrémité d'une manche souple. La manche souple et la tape protègent ainsi la source LASER de tout risque de contamination, par exposition directe à l'environnement dans lequel se trouve l'objet contaminé. Le matériau souple de la manche permet à un opérateur 700 ou bien à un bras téléopéré 70, de déplacer la source LASER dans l'enceinte confinée, le long et/ou autour de l'objet à traiter. L'opérateur peut ainsi adapter de façon optimum, la distance entre la source LASER et la surface de l'objet contaminé, pour traiter ledit objet.

La manche selon l'invention permet également à un opérateur 700 de traiter l'objet sans à avoir à le déplacer fréquemment pour respecter cette distance optimum. Le risque potentiel de rupture de confinement d'un gant, permettant à l'opérateur de déplacer l'objet traité, est ainsi fortement diminué.

Pour maximiser l'efficacité du faisceau LASER pour le traitement de la surface contaminée, la tape comporte une fenêtre transparente dont la transmittance est supérieure à 90 %, à la longueur d'onde d'émission de la source LASER. Ainsi, lorsque le faisceau LASER traverse la fenêtre transparente en direction de l'enceinte confinée, l'efficacité du faisceau LASER est préservée ou la moins réduite possible, par rapport à une même source LASER traversant par exemple, une paroi en thermoplastique transparent ou en verre quelconque et non spécifique aux rayonnements infrarouges.

## Revendications

1. Dispositif comportant une manche (400), obturée au niveau d'une première extrémité (410) de façon hermétique ou étanche par une tape (300) comportant une fenêtre (30) au moins partiellement transparente à au moins une longueur d'onde d'émission d'un faisceau LASER émis par une source LASER (40), de sorte que la manche (400) et la tape (300) soient aptes à former une barrière physique entre la source LASER (40) et l'environnement extérieur à la manche, **caractérisé en ce que**
la manche (400) est souple et peut s'allonger et/ou se courber, afin de permettre à sa première extrémité (410) de se déplacer et/ou de s'orienter dans un espace à une ou deux ou trois dimensions.

2. Dispositif selon la revendication précédente, la source LASER émettant un signal électromagnétique compris entre l'ultraviolet et l'infrarouge, de préférence dans l'infrarouge, plus particulièrement entre 900 nm et 1 200 nm, de préférence entre 1 045 nm et 1 070 nm.

3. Dispositif selon l'une des revendications précédentes, la fenêtre (30) ayant une valeur de transmittance supérieure à 90 %, de préférence supérieure à 95 %, à une longueur d'onde d'émission de la source LASER (40).

4. Dispositif selon l'une des revendications précédentes, la fenêtre (30) étant en silice fondue.

5. Dispositif selon l'une des revendications précédentes, la tape (300) comportant au moins une fenêtre (30) maintenue entre deux supports.

6. Dispositif selon l'une des revendications précédentes, la tape (300) comportant :
- un premier support (100) traversé par un premier alésage (112) et un deuxième alésage (122), de diamètres différents et au moins partiellement alignés,
- un second support (200) traversé par un troisième alésage (212), et éventuellement, par un quatrième alésage (230) au moins partiellement aligné avec le troisième alésage (212) et de diamètre supérieur, les alésages (112, 122, 212, 230) étant au moins partiellement alignés, pour permettre à au moins une partie d'un faisceau LASER de traverser la tape (300).

7. Dispositif selon la revendication précédente, le diamètre de la fenêtre (30) étant supérieur aux diamètres du premier alésage (112) et du troisième alésage (212), et inférieur, au diamètre du second alésage (122), la fenêtre (30) étant disposée dans le second alésage (122).

8. Dispositif selon la revendication 6, le diamètre de la fenêtre (30) étant supérieur aux diamètres du premier (112) et du troisième (212) alésage, et inférieur, aux diamètres du second (122) et quatrième (230) alésage, la fenêtre (30) étant disposée dans le quatrième alésage (230).

9. Dispositif selon l'une des revendications 6 à 8, un joint torique étanche (130) étant présent entre la fenêtre (30) et le premier support (100) et/ou le second support (200), afin de renforcer ou d'améliorer l'étanchéité entre le premier alésage (112) et le troisième alésage (212).

10. Dispositif selon l'une des revendications 6 à 9, le premier support (100) et le second support (200) étant maintenus en contact ou à proximité l'un de l'autre par des moyens de maintien, de préférence réversibles, afin de permettre le remplacement de la fenêtre (30).

11. Dispositif selon la revendication précédente, les moyens de maintien étant des surfaces filetées (124, 202, 238), et/ou des vis de serrage (670) et/ou des aimants.

12. Dispositif selon l'une des revendications précédentes, comportant des moyens de fixation (50, 80, 85, 90, 95), permettant de maintenir la source LASER (40) à proximité ou contre la tape (300), pour qu'au moins une partie de son faisceau LASER traverse ladite tape.

13. Dispositif selon la revendication précédente, les moyens de fixation (50, 80, 85, 90, 95) étant réversibles, afin de permettre le montage et/ou le démontage de la source LASER (40) à proximité ou contre la tape (300).

14. Dispositif selon la revendication 12 ou 13, les moyens de fixation (50, 80, 85, 90, 95) étant réglables et/ou repositionnables pour s'adapter à des sources LASERs (40) différentes.

15. Dispositif selon l'une des revendications 12 à 14, les moyens de fixations étant des bandes auto-agrippantes (90, 95) et/ou aimantées (85) et/ou des dispositifs de maintien (80) de type griffe.

16. Dispositif selon l'une des revendications 6 à 15, la première extrémité (410) de la manche (400) étant en contact avec les bords externes (102, 202) de la tape (300), parallèles aux parois d'un des alésages précédents (112, 122, 212, 230).

17. Dispositif selon l'une des revendications 6 à 16, la première extrémité (410) de la manche (400) étant maintenue en contact, par l'intermédiaire de bandes ou de joncs élastiques (340), contre les bords externes (102) de la tape (300), parallèles aux parois d'un des alésages précédents (112, 122, 212, 230), de façon étanche ou hermétique.

18. Dispositif selon l'une des revendications précédentes, comportant un appendice de protection (600), recouvrant au moins partiellement une face de la tape (300) extérieure à la manche (400), ledit appendice de protection étant traversé par une voie reliant une première ouverture (620), se situant au niveau de son sommet, et une seconde ouverture (630) se situant au niveau de sa base (610), la voie et les deux ouvertures (620, 630) étant au moins partiellement alignées avec l'un des alésages précédents (112, 122, 212, 230) et l'appendice de protection (600) étant reliée à un dispositif d'aspiration, par l'intermédiaire d'une troisième ouverture (640), afin d'évacuer une pollution présente à la périphérie de sa première ouverture (620).

19. Dispositif selon la revendication précédente, l'appendice de protection (600) comportant une quatrième ouverture (650) présente à l'opposé de la troisième ouverture (640), afin de générer une lame ou un flux d'air devant la fenêtre (30).

20. Dispositif selon l'une des revendications précédentes, la tape (300) comportant un dispositif de maintien externe (500) de la première extrémité (410) de la manche (400), reliant une poignée (520) à une surface de la tape (300), sans rompre le confinement de la manche (400).

21. Dispositif selon la revendication précédente, le dispositif de maintien externe (500) comportant un collet ou une bague (564, 566), pouvant maintenir la source LASER (40) à travers la manche (400), sans exposer la source LASER (40) à l'environnement extérieur à la manche (400).

22. Dispositif selon l'une des revendications précédentes, la seconde extrémité (420) de la manche (400) étant maintenue, avantageusement de façon hermétique, contre une paroi (10).

23. Procédé de traitement d'un objet (60) situé à l'extérieur d'une manche (400), celle-ci comportant une source LASER (40) maintenue par des moyens de fixation (50) contre ou à proximité d'une tape (300) obturant une première extrémité (410) de ladite manche (400), de sorte que la manche (400) et la tape (300) soient aptes à former une barrière physique entre la source LASER (40) et l'environnement extérieur à la manche, le procédé de traitement de l'objet (60) comportant les étapes suivantes :
- déplacement et/ou orientation de la source LASER (40) à proximité de la surface à traiter (60), par un bras téléopéré (70) ou un opérateur (700),
- mise en fonctionnement de la source LASER (40) par le bras téléopéré (70) ou l'opérateur (700) pour traiter l'objet (60).

24. Procédé selon la revendication précédente, comportant au moins une étape de montage et/ou de démontage, de la source LASER (40) sur la tape (300).

25. Procédé selon la revendication 23 ou 24, comportant une étape de montage et/ou de démontage de la fenêtre (30) dans la tape (300).

## Patentansprüche

1. Vorrichtung mit einem Ärmel (400), der im Bereich eines ersten Endes (410) von einer Blende (300) mit einem Fenster (30) verschlossen wird, das gegenüber zumindest einer Emissionswellenlänge eines LASER-Strahls zumindest teilweise transparent ist, der von einer LASER-Quelle (40) emittiert wird, so dass der Ärmel (400) und die Blende (300) dazu geeignet sind, eine physische Barriere zwischen der LASER-Quelle (40) und der Umgebung außerhalb des Ärmels zu bilden, **dadurch gekennzeichnet, dass**
der Ärmel (400) nachgiebig ist und in hermetischer bzw. abgedichteter Art und Weise ausdehnen und/oder krümmen kann, um seinem ersten Ende (410) zu gestatten, sich zu verlagern und/oder in einen ein- bzw. zwei- bzw. dreidimensionalen Raum auszurichten.

2. Vorrichtung nach dem vorangehenden Anspruch, wobei die LASER-Quelle ein elektromagnetisches Signal emittiert, das zwischen dem Ultraviolett- und dem Infrarotbereich liegt, vorzugsweise im Infrarotbereich, insbesondere zwischen 900 nm und 1.200 nm, vorzugsweise zwischen 1.045 nm und 1.070 nm.

3. Vorrichtung nach einem der vorangehenden Ansprüche, wobei das Fenster (30) einen Durchlasswert höher als 90 %, vorzugsweise höher als 95 % für eine Emissionswellenlänge der LASER-Quelle (40) hat.

4. Vorrichtung nach einem der vorangehenden Ansprüche, wobei das Fenster (30) aus geschmolzenem Siliciumdioxid besteht.

5. Vorrichtung nach einem der vorangehenden Ansprüche, wobei die Blende (300) zumindest ein Fenster (30) aufweist, das zwischen zwei Trägern festgehalten wird.

6. Vorrichtung nach einem der vorangehenden Ansprüche, wobei die Blende (300) enthält:
- einen ersten Träger (100), der von einer ersten Bohrung (112) und einer zweiten Bohrung (122) durchsetzt wird, die unterschiedliche Durchmesser haben und zumindest teilweise fluchten,
- einen zweiten Träger (200), der von einer dritten Bohrung (212) und gegebenenfalls von einer vierten Bohrung (230) durchsetzt wird, die zumindest teilweise mit der dritten Bohrung (212) fluchtet und einen größeren Durchmesser hat, wobei die Bohrungen (112, 122, 212, 230) zumindest teilweise fluchten, um zumindest einem Teil eines LASER--Strahls zu gestatten, durch die Blende (300) zu treten.

7. Vorrichtung nach dem vorangehenden Anspruch, wobei der Durchmesser des Fensters (30) größer als der jeweilige Durchmesser der ersten Bohrung (112) und der dritten Bohrung (212) ist und kleiner als der Durchmesser der zweiten Bohrung (122) ist, wobei das Fenster (30) in der zweiten Bohrung (122) angeordnet ist.

8. Vorrichtung nach Anspruch 6, wobei der Durchmesser des Fensters (30) größer als der jeweilige Durchmesser der ersten Bohrung (112) und der dritten Bohrung (212) ist und kleiner als der Durchmesser der zweiten (122) und der vierten Bohrung (230) ist, wobei das Fenster (30) in der vierten Bohrung (230) angeordnet ist.

9. Vorrichtung nach einem der Ansprüche 6 bis 8, wobei ein abdichtender O-Ring (130) zwischen dem Fenster (30) und dem ersten Träger (100) und/oder dem zweiten Träger (200) vorhanden ist, um die Dichtheit zwischen der ersten Bohrung (112) und der dritten Bohrung (212) zu verstärken bzw. zu verbessern.

10. Vorrichtung nach einem der Ansprüche 6 bis 9, wobei der erste Träger (100) und der zweite Träger (200) über vorzugsweise lösbare Haltemittel in Kontakt bzw. in der Nähe voneinander gehalten werden, um das Ersetzen des Fensters (30) zu gestatten.

11. Vorrichtung nach dem vorangehenden Anspruch, wobei die Haltemittel Gewindeflächen (124, 202, 238) und/oder Spannschrauben (670) und/oder Magnete sind.

12. Vorrichtung nach einem der vorangehenden Ansprüche, enthaltend Befestigungsmittel (50, 80, 85, 90, 95), mit denen die LASER-Quelle (40) in der Nähe bzw. an der Blende (300) gehalten werden kann, damit zumindest ein Teil ihres LASER-Strahls die Blende durchsetzt.

13. Vorrichtung nach dem vorangehenden Anspruch, wobei die Befestigungsmittel (50, 80, 85, 90, 95) lösbar sind, um das Montieren und/oder Abmontieren der LASER-Quelle (40) in der Nähe bzw. an der Blende (300) zu gestatten.

14. Vorrichtung nach Anspruch 12 oder 13, wobei die Befestigungsmittel (50, 80, 85, 90, 95) verstellbar und/oder erneut positionierbar sind, um sich an unterschiedliche LASER-Quellen (40) anzupassen.

15. Vorrichtung nach einem der Ansprüche 12 bis 14, wobei die Befestigungsmittel Klettverschlussbänder (90, 95) und/oder Magnete (85) und/oder klauenartige Haltevorrichtungen (80) sind.

16. Vorrichtung nach einem der Ansprüche 6 bis 15, wobei das erste Ende (410) des Ärmels (400) mit den Außenrändern (102, 202) der Blende (300) in Kontakt steht, die parallel zu den Wänden einer der vorangehenden Bohrungen (112, 122, 212, 230) verlaufen.

17. Vorrichtung nach einem der Ansprüche 6 bis 16, wobei das erste Ende (410) des Ärmels (400) über Bänder bzw. Federringe (340) an den Außenrändern (102) der Blende (300), die parallel zu den Wänden eines der vorangehenden Bohrungen (112, 122, 212, 230) verlaufen, in abgedichteter bzw. hermetischer Weise in Kontakt gehalten wird.

18. Vorrichtung nach einem der vorangehenden Ansprüche, enthaltend einen Schutzfortsatz (600), der zumindest teilweise eine Seite der Blende (300) außerhalb des Ärmels (400) bedeckt, wobei der Schutzfortsatz von einer Bahn durchsetzt wird, welche eine erste Öffnung (620), die sich im Bereich ihres Scheitels befindet, und eine zweite Öffnung (630) verbindet, die sich im Bereich seiner Grundfläche (610) befindet, wobei die Bahn und die beiden Öffnungen (620, 630) zumindest teilweise mit einer der vorangehenden Bohrungen (112, 122, 212, 230) fluchten und der Schutzfortsatz (600) über eine dritte Öffnung (640) mit einer Saugvorrichtung verbunden ist, um eine am Umfang seiner ersten Öffnung (620) vorhandene Verschmutzung abzuführen.

19. Vorrichtung nach dem vorangehenden Anspruch, wobei der Schutzfortsatz (600) eine vierte Öffnung (650) aufweist, die entgegengesetzt zur dritten Öffnung (640) vorhanden ist, um eine Luftschicht bzw. einen Luftstrom vor dem Fenster (30) zu erzeugen.

20. Vorrichtung nach einem der vorangehenden Ansprüche, wobei die Blende (300) eine äußere Haltevorrichtung (500) für das erste Ende (410) des Ärmels (400) aufweist, welche einen Griff (520) mit einer Fläche der Blende (300) verbindet, ohne dabei die Einschließung des Ärmels (400) zu unterbrechen.

21. Vorrichtung nach dem vorangehenden Anspruch, wobei die äußere Haltevorrichtung (500) einen Bund bzw. einen Ring (564, 566) aufweist, welcher die LASER-Quelle (40) durch den Ärmel (400) hindurch halten kann, ohne dabei die LASER-Quelle (40) der Umgebung außerhalb des Ärmels (400) auszusetzen.

22. Vorrichtung nach einem der vorangehenden Ansprüche, wobei das zweite Ende (420) des Ärmels (400) vorteilhaft in hermetischer Weise an einer Wand (10) gehalten wird.

23. Verfahren zum Bearbeiten eines Objekts (60), das außerhalb eines Ärmels (400) liegt, wobei dieser eine LASER-Quelle (40) aufweist, die von Befestigungsmitteln (50) an bzw. in der Nähe einer Blende (300) gehalten wird, welche ein erstes Ende (410) des Ärmels (400) verschließt, so dass der Ärmel (400) und die Blende (300) dazu geeignet sind, eine physische Barriere zwischen der LASER-Quelle (40) und der Umgebung außerhalb des Ärmels zu bilden, wobei das Verfahren zum Bearbeiten des Objekts (60) die nachfolgenden Schritte umfasst:
- Verlagern und/oder Ausrichten der LASER-Quelle (40) in der Nähe der zu bearbeitenden Fläche (60) durch einen ferngesteuerten Arm (70) oder eine Bedienperson (700),
- Inbetriebnahme der LASER-Quelle (40) durch den ferngesteuerten Arm (70) bzw. die Bedienperson (700), um das Objekt (60) zu bearbeiten.

24. Verfahren nach dem vorangehenden Anspruch, umfassend zumindest einen Schritt des Montierens und/oder Abmontierens der LASER-Quelle (40) an der Blende (300).

25. Verfahren nach Anspruch 23 oder 24, umfassend einen Schritt des Montierens und/oder Abmontierens des Fensters (30) in der Blende (300).

## Claims

1. A device comprising a sleeve (400), hermetically or tightly sealed at a first end (410) by a plug (300) comprising a window (30) at least partially transparent to at least one emission wavelength of a LASER beam emitted by a LASER source (40), so that the sleeve (400) and the plug (300) are able to form a physical barrier between the LASER source (40) and the environment external to the sleeve, **characterized in that** the sleeve (400) is supple and can extend and/or bend in order to enable its first end (410) to be moved and/or oriented in a one- or two- or three-dimension space.

2. The device according to the preceding claim, wherein the LASER source emits an electromagnetic signal comprised between ultraviolet and infrared, preferably in infrared, more particularly between 900 nm and 1200 nm, preferably between 1045 nm and 1070 nm.

3. The device according to one of the preceding claims, wherein the window (30) has a transmittance value higher than 90%, preferably higher than 95%, at an emission wavelength of the LASER source (40).

4. The device according to one of the preceding claims, wherein the window (30) is of fused silica glass.

5. The device according to one of the preceding claims, wherein the plug (300) includes at least one window (30) maintained between two supports.

6. The device according to one of the preceding claims, wherein the plug (300) includes:
- a first support (100) through which a first bore (112) and a second bore (122) pass, with different diameters and at least partially aligned,
- a second support (200) through which a third bore (212) and possibly a fourth bore (230) at least partially aligned with the third bore (212) and with a higher diameter pass, the bores (112, 122, 212, 230) being at least partially aligned, to enable at least one part of the LASER beam to pass through the plug (300).

7. The device according to the preceding claim, wherein the diameter of the window (30) is higher than the diameters of the first bore (112) and the third bore (212), and lower than the diameter of the second bore (122), the window (30) being provided in the second bore (122).

8. The device according to claim 6, wherein the diameter of the window (30) is higher than the diameters of the first (112) and third (212) bores, and lower than the diameters of the second (122) and fourth (230) bores, the window (30) being provided in the fourth bore (230).

9. The device according to one of the claims 6 to 8, wherein a tight O-ring (130) is present between the window (30) and the first support (100) and/or the second support (200), in order to enhance or improve the tightness between the first bore (112) and the third bore (212).

10. The device according to one of the claims 6 to 9, wherein the first support (100) and the second support (200) are maintained in contact or in the vicinity of each other by maintaining means, preferably reversible, in order to enable the window (30) to be replaced.

11. The device according to the preceding claim, wherein the maintaining means are threaded surfaces (124, 202, 238), and/or clamping screws (670) and/or magnets.

12. The device according to one of the preceding claims, including attaching means (50, 80, 85, 90, 95), enabling the LASER source (40) to be maintained in the vicinity of or against the plug (300), for at least one part of its LASER beam to pass through said plug.

13. The device according to the preceding claim, wherein the attaching means (50, 80, 85, 90, 95) are reversible, so that the LASER source (40) can be mounted and/or dismounted in the vicinity of or against the plug (300).

14. The device according to claim 12 or 13, wherein the attaching means (50, 80, 85, 90, 95) are adjustable and/or repositionable to adapt to different LASER sources (40).

15. The device according to one of claims 12 to 14, wherein the attaching means are self-gripping (90, 95) and/or magnetized (85) strips and/or claw type maintaining devices (80).

16. The device according to one of claims 6 to 15, wherein the first end (410) of the sleeve (400) is in contact with the outer edges (102, 202) of the plug (300), parallel to the walls of one of the previous bores (112, 122, 212, 230).

17. The device according to one of claims 6 to 16, wherein the first end (410) of the sleeve (400) is tightly or hermetically maintained in contact, through elastic strips or beads (340), against the outer edges (102) of the plug (300), parallel to the walls of one of the previous bores (112, 122, 212, 230).

18. The device according to one of the preceding claims, including a protection appendage (600), covering at least partially one face of the plug (300) external to the sleeve (400), said protecting appendage through which passes a way connecting a first opening (620), located at the top thereof, and a second opening (630) located at its bottom (610), the way and both openings (620, 630) being at least partially aligned with one of the previous bores (112, 122, 212, 230) and the protecting appendage (600) being connected to a suction device, through a third opening (640), in order to discharge a pollution present at the periphery of its first opening (620).

19. The device according to the preceding claim, wherein the protecting appendage (600) includes a fourth opening (650) present opposite the third opening (640), in order to generate an air blade or flow in front of the window (30).

20. The device according to one of the preceding claims, wherein the plug (300) includes an outer maintaining means (500) of the first end (410) of the sleeve (400), connecting a handle (520) to a surface of the plug (300), without breaking the containment of the sleeve (400).

21. The device according to the preceding claim, wherein the outer maintaining device (500) includes a collar or ring (564, 566), capable of maintaining the LASER source (40) through the sleeve (400), without exposing the LASER source (40) to the environment external to the sleeve (400).

22. The device according to one of the preceding claims, wherein the second end (420) of the sleeve (400) is maintained, advantageously hermetically, against a wall (10).

23. A method for treating an object (60) located outside a sleeve (400), which sleeve includes a LASER source (40) maintained by attaching means (50) against or in the vicinity of a plug (300) sealing a first end (410) of said sleeve (400), so that the sleeve (400) and the plug (300) are able to form a physical barrier between the LASER source (40) and the environment external to the sleeve, said method comprising the following steps:
- moving and/or orienting the LASER source (40) in the vicinity of the surface to be treated (60), by a teleoperated arm (70) or an operator (700),
- operating the LASER source (40) by the teleoperated arm (70) or the operator (700) for treating the object (60).

24. The method according to the preceding claim, including at least one step of mounting and/or dismounting the LASER source (40) to/from the plug (300).

25. The method according to claim 23 or 24, including a step of mounting and/or dismounting the window (30) in the plug (300).
